# EUROPEAN PATENT APPLICATION

(11) **EP 2 444 024 A1**
(43) Date of publication of application: **25.04.2012**
(21) Application number: 10188220.7
(22) Date of filing: 20.10.2010
(51) Int. Cl.: A61C 8/00

(54) **A dental fixture, a dental component and a dental implant assembly**

(71) Applicant: Astra Tech AB, 431 21 Mölndal (SE)
(72) Inventor: Holmström, Johan, SE-428 37, KÅLLERED (SE); Bengtzelius, Björn, SE-438 35, LANDVETTER (SE)
(74) Representative: Somlo, Tommy

(57) **Abstract**

The present invention relates to a dental fixture for insertion into a jawbone, said fixture comprising a holding portion which is arranged and configured for holding an engagement portion of a dental component, the holding portion being provided with an indexing section, wherein the shape of the mating contour of the indexing section in a first plane differ from the shape of the mating contour of the indexing section in a second plane being taken at a different height as seen in the apical-coronal extension of said fixture, and wherein the shapes of the mating contours of the indexing section at said first and second planes together allow a received dental component to be positioned in only one or two positions in relation to the fixture. The present invention also relates to a corresponding dental component and to dental implant assemblies.

## Description

### Technical field

The present invention relates to a dental fixture for insertion into a jawbone, said fixture comprising a holding portion which is arranged and configured for holding an engagement portion of a dental component. The present invention also relates to a dental component, comprising an engagement portion for engagement with a holding portion of a dental fixture adapted to be inserted into a jawbone. Also, the present invention relates to dental implant assemblies comprising a dental component connected to or to be connected to a dental fixture.

### Background of the Invention

A frequent way today to restore a damaged or lost tooth is to install a dental implant comprising a fixture in the adjacent jawbone tissue (maxilla or mandible) and replace the damaged or lost tooth with a dental prosthesis. A superstructure, such as an abutment, may be used as a connection between the dental prosthesis and the installed fixture.

There are various fixture configurations. For instance, a fixture may have a flat topped coronal head portion, which may be installed in any rotational position relative to the jawbone. Another type of fixture configuration is a fixture having a sloped coronal end portion, such as disclosed in US 6,655,961, in which the length of the fixture is greater on the lingual side than on the buccal side in order to match the contour of the jawbone. Since fixtures are quite small, around 10 mm, it may be quite difficult for a dentist to see the orientation of the slope of the fixture during the process of inserting the fixture into the jawbone. It follows that there is a risk that, when the fixture is in its installed position in the jawbone, the sloped coronal end portion is not oriented correctly and does not follow the contours of the jawbone as intended. Thus, it would be desirable to ensure that the dentist installs the sloped fixture with correct orientation, without restricting his/her freedom of handling/installing other fixtures, such as flat topped fixtures, that do not have a designated rotational orientation with respect to the jawbone.

Similarly, to the above described fixture/jawbone-interface, for a superstructure, such as an abutment, there may be an abutment/fixture-interface in which the abutment may be positioned in various rotational positions relative to the fixture, and there may be an abutment/fixture-interface in which the abutment should only be positioned in one way relative to the fixture (e.g. an abutment having a sloped portion matching the sloped head portion of a fixture). Thus, also with regard to this interface, it would be desirable to ensure that the dentist connects certain superstructures with a correct rotational orientation relative to the fixtures, without restricting his/her freedom of action when connecting other superstructures, that do not have a designated rotational orientation with respect to the patients jawbone, to fixtures.

Hence, there exist a need for a dental fixture that is capable of receiving abutments in either one, any one of a few or in any one of a plurality of alternative rotational positions, depending on the interface of the abutment. Furthermore, there exist a need for abutments that may only be received in one or in any one of a few rotational positions in fixture. There also exist a need for abutments with an interface for connection to a fixture that may easily be altered between an abutment that is intended to be received in only one position in a fixture and an abutment that is intended to be received in any one of a plurality of positions in a fixture. Furthermore, there exist a need for fixtures that may safely and reliably be positioned in a desired position in relation to a patient's jawbone.

### Summary of the Invention

The present invention provides a solution to the above-mentioned objectives and provides a dental fixture that may receive a dental component in either one, a few or a multiple of rotational positions depending on the configuration of the dental component. The present invention also provide a dental component that may be received in only one or two rotational positions in a dental fixture and which dental component has an interface that may easily be adjusted so that the dental component may be received in any one of a plurality of rotational positions in a fixture.

According to at least a first aspect of the invention, a dental fixture for insertion into a jawbone is provided. The dental fixture comprises a holding portion which is arranged and configured for holding an engagement portion of a dental component, the holding portion being provided with an indexing section, wherein the shape of the mating contour of the indexing section in a first plane differ from the shape of the mating contour of the indexing section in a second plane being taken at a different height as seen in the apical-coronal extension of said fixture, and wherein the shapes of the mating contours of the indexing section at said first and second planes together allow a received dental component to be positioned in only one or two positions in relation to the fixture.

The term indexing section is throughout the application meant to understand that the shape of the section offers a limited number of available rotational positions. Hence, a section having only a rotational symmetrical shape does not constitute an indexing section.

The term holding portion is throughout the application meant to understand a portion that is adapted to receive or support a dental component. However, it does not necessarily mean that the portion must receive or support the dental component permanently, it is for example also understood to mean a portion that is adapted to e.g. temporarily be in contact with and support a driver during installation of the fixture.

The mating shape of the indexing section at the at least two planes may be chosen from generally any available shape that provides a limited number of rotational positions. The important factor is that the shapes of the indexing section at each of the two planes may cooperate to provide the desired number of rotational or indexing positions for a dental component being received. Hence, the shape of the indexing sections at these two different planes should not be the same.

Preferably, the two planes are substantially perpendicular to the longitudinal axis of the dental fixture and are parallel to each other.

An indexing section having different shapes along its longitudinal extension provides for more options when designing the amount of rotational positions a dental component may be positioned in relation to the dental fixture, as compared to fixtures having an indexing section with only one shape. Furthermore, by providing an indexing section having different shapes along its longitudinal extension, the shape at each plane intersecting the indexing section may be made less complex than the shape of the indexing sections of those dental fixtures providing the same possibilities of offering one or many rotational positions of a dental component but with only one shape of the indexing section. Hence, providing the holding portion of the fixture with at least two different shapes may be beneficial in terms of production and construction constraints.

Furthermore, it is also possible to provide dental components that can have a single possible rotational orientation/position with this type of fixture, dental components that can have two different rotational orientations/positions, and also to provide dental components that have several possible rotational orientations/positions with the same type of fixture.

A fixture having an indexing section that only allow a dental component to be received in one rotational orientation ensures that the dental practitioner connects the superstructures with a correct rotational orientation relative to the fixtures. Also, if e.g. a sloped or sculptured dental implant is being positioned e.g. 180° degrees wrong it is easily detected by the dental practitioner. Hence, also a fixture allowing a received dental component to be positioned in two different rotational orientations fulfills the objectives of the invention.

According to at least one example embodiment, the shape of the mating contour of the indexing section at at least one of said first and second planes individually allow a received dental component to be positioned in a plurality of positions. According to at least one other example embodiment, the shape of the mating contour of the indexing section at both of said first and second planes individually allow a received dental component to be positioned in a plurality of positions. In these example embodiments, a dental component being provided with an engagement portion having a shape corresponding to the shape of the indexing section may, for example and depending on the configuration of the engagement portion and the indexing section, only be received in the dental component in one or a few designated rotational positions due to the cooperation of the shape of the indexing section at the first and second planes. On the other hand, a dental component which has an engagement portion with a shape only corresponding to the shape of the indexing section at either the first or second plane may be received in any one of a plurality of alternative rotational positions in the fixture.

According to at least one example embodiment, the shapes of the mating contours of the indexing section at said first and second planes together allow a received dental component to be positioned in only one position in relation to the fixture.

According to at least one example embodiment, the shape of the mating contour of the indexing section at one of said first and second planes of said indexing section individually allow a received dental component to be positioned in only one position. In this example embodiment, a dental component being provided with an engagement portion having a corresponding shape may only be received in the dental component in one designated rotational position. On the other hand, a dental component being provided with an engagement portion having a shape corresponding to the shape of the indexing section at the other plane, i.e. corresponding to the shape that does not only allow one rotational position, may be received in any one of a plurality of alternative rotational positions in the fixture.

According to at least one example embodiment, the mating contour of the indexing section at at least one of said planes has the shape of a polygon.

Hence, in this embodiment, the indexing section has the shape of a polygon at at least one plane of the indexing section. If the dental fixture has a socket, the polygon may be an internal polygon provided in the socket. If the dental fixture instead is provided with a post portion having the indexing section at its outer surface, the polygon may be an external polygon. A dental component being provided with an engagement portion having the shape of a corresponding polygon may then be rotationally positioned in alternative positions in the dental fixture. The number of alternative positions corresponds to the number of corners or sides of the polygon, i.e. if the indexing section at that plane and the engagement portions are corresponding pentagons, five different positions are possible, if the indexing section at that plane and the engagement portions are corresponding hexagons, six different positions are possible, and so on. Hence, using a polygonal shape for the indexing section at at least one of the planes provides the benefit of in a simple manner offering a multitude of rotational positions, at the same time as it provides an effective rotational locking of the dental component to the fixture once the fixture has received the dental component.

According to at least one example embodiment, the polygonal shapes may be chosen from a group of polygons consisting of triangles, tetragons, pentagons, hexagons, heptagons, octagons, nonagons and decagons.

It is to be noted that the sides of the polygons may, but need not, have a straight extension. It is for example also conceivable with slightly curved sides as long as the major polygonal shape remains. Furthermore, the corners of the polygons may, but need not, be distinct corners. It is for example also conceivable with rounded corners.

According to one example embodiment, the indexing section has a polygonal shape at both the first and second planes.

Providing the indexing section so that it has polygonal shapes at both the first and second planes may, in a manner similar to what has been described above, be advantageous in terms of simple production. Furthermore, it provides for an even further multitude of usage possibilities for the dental fixture. For example, in the case where the dental fixture is intended to receive a dental component having a designated rotational position in relation to the fixture, e.g. a customized abutment, the abutment may be provided with an engagement portion having shapes corresponding to the polygons at the first and second planes. Such an abutment may then be received in only one or a few rotational positions, and hence, it simplifies for the dental practitioner to position the abutment in the correct position. Another dental component may be provided with an engagement portion having only a corresponding shape at the height of one of the planes. Depending on the number of corners/sides of that polygon, the dental component may be received in a certain number of defined rotational positions. Yet another dental component may be provided with an engagement portion having a shape corresponding to the shape of the indexing section at the location of the other plane. Depending on the number of corner/sides of that polygon, the dental component may be received in a certain number of defined rotational positions. If the polygons at the first and second planes are not the same, the number of rotational positions this dental component may be received in the dental fixture will then differ from the previously described dental component having a shape corresponding to the shape of the indexing section at the first plane.

According to at least one example embodiment, the polygons may be chosen from a group of polygons consisting of triangles, tetragons, pentagons, hexagons, heptagons, octagons, nonagons and decagons.

According to at least one example embodiment, the indexing section is arranged and configured such that the number of sides of it at one of the planes is not a multiple integer of the number of sides of it at the other plane of said at least two planes.

Providing an indexing section having the shape of a polygon at one plane and the shape of another polygon at a second plane, and where the number of sides of one of the polygons is not a multiple integer of the number of sides of the other polygon gives good indexing possibilities for a dental component that is to be received in the dental fixture. A dental component having an engagement portion corresponding to the shape of the indexing section at both the first and second planes, respectively, will then only be possible to arrange in one or two different rotational positions in the fixture. If two rotational positions are available, the rotational positions are separated 180° degrees from each other. In the case of the dental component being e.g. a contoured or customized abutment, a dental practitioner will easily identify that the abutment is positioned 180° wrong and hence, be able to rotate the abutment to the correct position.

According to at least one example embodiment, the indexing section has a polygonal shape at both the first and second planes, wherein the indexing section is arranged and configured such that the number of sides of it at one of the planes is an even number and the number of sides of it at the other plane of said at least two planes is an uneven number.

Such a configuration allows a dental component with an engagement portion having a shape corresponding to the indexing section at both the first and second planes, respectively, to be positioned in only one rotational position in the dental fixture. However, as for the embodiments described above, a dental component having an engagement portion corresponding only to the shape at either the first or second plane may be arranged in a certain number of alternative rotational positions, depending on the shape of the indexing section at each of the planes.

According to at least one exemplary embodiment, the shape of the mating contour of the indexing section of said holding portion differs between adjacent planes, thereby creating a continuous transformation from the shape of the indexing section at the most coronally located plane to the shape of the indexing section at the most apically located plane. It is for example possible to consider an indexing section having at a most coronally located plane the shape of a polygon and at a most apically located plane the shape of another polygon. The shape of the indexing section may then gradually, as seen in coronal-apical direction, transform from the first polygon to the second polygon.

According to at least one exemplary embodiment, the shape of the mating contour of the indexing section at one plane is the same as the shape of the mating contour at a plane adjacent to said one plane.

According to at least one exemplary embodiment, the shape and dimension of the mating contour of the indexing section at one plane is the same as the shape and dimensions of the mating contour at a plane adjacent to said one plane.

Hence, for these embodiments, at least some planes may be located or taken adjacent planes having the same shape and in certain embodiments also the same size. It is for example possible to consider an indexing section having a coronal section, i.e. a section of the indexing section having an axial extension as seen in apical-coronal direction such that it contains a plurality of planes, having e.g. a polygonal shape. This section may then be either cylindrical or conical. The indexing section may furthermore comprise an apical section, i.e. a section of the socket having an axial extension as seen in apical-coronal direction such that it contains a plurality of planes, having another polygonal shape or any other shape such as e.g. a groove being provided with a protrusion. Also this section may then be either cylindrical or conical. In these embodiments, the coronal and apical sections may be connected to each other through e.g. a gradual transformation of the first shape to the other shape as described above or e.g. through a wall having e.g. a cylindrical or conical shape.

According to at least one example embodiment, said indexing section comprises a protrusion provided at a wall of said holding portion, and wherein said protrusion is provided at said second plane of said indexing section.

A dental fixture with this configuration may receive a dental component being provided with a corresponding recess in only one defined rotational position. However, a dental component without the corresponding recess or with many recesses provided at its circumference may be received in a number of alternative rotational positions, the possible number of rotational positions being dependent on the configuration of the shape of the indexing section at the first plane and the corresponding shape of the engagement portion of the dental component.

According to at least one example embodiment, said indexing section comprises a groove provided at the bottom surface of said holding portion, wherein a protrusion protrudes from the circumference of said groove towards the center of said fixture, and wherein said groove and protrusion is provided at said second plane.

A dental fixture with this configuration may receive a dental component being provided with an engagement portion comprising a corresponding collar in only one defined rotational position. However, a dental component without the corresponding collar may, since no portion of the dental component then has to engage the groove, be received in a number of alternative rotational positions. Also in this example embodiment is the possible number of rotational positions being dependent on the configuration of the shape of the indexing section at the first plane and the corresponding shape of the engagement portion of the dental component.

According to at least one example embodiment, the collar is substantially circular.

According to at least one example embodiment, said indexing section comprises a groove provided at the coronal surface of said engagement means, wherein a protrusion protrudes from the circumference of said groove towards the center of said fixture.

A dental fixture with this configuration may receive a dental component being provided with an engagement portion comprising a corresponding collar in only one defined rotational position. However, a dental component without the corresponding collar may, since no portion of the dental component then has to engage the groove, be received in a number of alternative rotational positions. Also in this example embodiment is the possible number of rotational positions being dependent on the configuration of the shape of the indexing section at the plane without the groove and the corresponding shape of the engagement portion of the dental component.

According to at least one example embodiment, the collar is substantially circular.

Preferably, said second plane is located apically of said first plane of said indexing section as seen in the longitudinal direction of the fixture.

The holding portion of the dental fixture may have various configurations. According to at least one example embodiment, the holding portion is a socket which extends apically from a coronal end of the fixture. According to one example embodiment, the outer circumference of the indexing section at the apically located plane has dimensions such that it is able to be circumscribed in the outer circumference of the indexing section at the coronally located plane.

The reason that it may be beneficial that the outer circumference of an apically provided plane may be able to be circumscribed in the outer circumference of a coronally provided plane is that an engagement portion of a dental component should be able to pass through the coronally provided plane before it engages the apically provided plane. That the outer circumference of an apically provided plane is able to be circumscribed in the outer circumference of a coronally provided plane does not imply that the shape of the two planes are the same. It does also not imply that the apically provided plane is smaller than the coronal plane, they may have the same size.

Hence, said holding portion may be a socket comprising a substantially cylindrical wall section, wherein said indexing planes are provided at said substantially cylindrical wall section. However, said holding portion may also be a socket comprising an apically tapering wall section, wherein said indexing planes are provided at said apically tapering wall section. The tapering wall section may provide a conical seal with a mating tapering section of the dental component (such as an abutment).

According to another example embodiment, the holding portion is a post portion extending coronally from the bone-engaging portion of the fixture. According to an example embodiment, the outer circumference of the indexing section at the coronally located plane has dimensions such that it is able to be circumscribed in the outer circumference of the indexing section at the apically located plane.

The reason that the outer circumference of a coronally provided plane should be able to be circumscribed in the outer circumference of an apically provided plane is that an engagement portion of a dental component should be able to pass the coronally provided plane before it engages the apically provided plane. That the outer circumference of an apically provided plane is able to be circumscribed in the outer circumference of a coronally provided plane does not imply that the shape of the two planes are the same. It does also not imply that the apically provided plane is smaller than the coronal plane, they may have the same size.

Hence, said holding portion may be a post portion having substantially cylindrical outer walls, wherein said indexing planes are provided at said walls. Alternatively, said holding portion is a post portion having a coronally tapering wall section.

According to one example embodiment, the dental fixture is a subgingival fixture, in which the holding portion comprises a socket which is arranged and configured for receiving the engagement portion of the dental component, wherein the engagement portion being in the form of a post.

According to one example embodiment, the dental fixture is a transgingival fixture and the holding portion comprises a socket which is arranged and configured for receiving the engagement portion of the dental component, wherein the engagement portion being in the form of a post.

According to one example embodiment, the dental fixture is a transgingival fixture and the holding portion comprises a post which is arranged and configured for receiving a dental component having an engagement portion in the form of an internal bore.

According to another aspect of the present invention, a dental component comprising an engagement portion for engagement with a holding portion of a dental fixture adapted to be inserted into a jawbone is provided. The shape of the mating contour of the engagement portion in a first plane differ from the shape of the mating contour of the engagement portion in a second plane being taken at a different height as seen in the apical-coronal extension of said dental component, and wherein the shapes of the mating contours of the engagement portion together allow the dental component to be positioned in only one or two rotational positions in relation to a dental fixture.

The term engagement portion is meant to understand a portion of the dental component that is adapted to engage a holding portion of a dental fixture and that has, at least in one plane, a shape that offers a limited number of available rotational positions when the dental component is received in a dental fixture having a corresponding shape. Hence, a portion having only a rotationally symmetrical shape does not constitute an engagement portion.

The mating shape of the engagement portion at each of the at least two planes may be chosen from generally any available shape that provides a limited number of rotational positions. The important factor is that the shape of the engagement portion at each of the planes may cooperate to provide the desired number of rotational or indexing positions for the dental component when it is received in a holding portion a fixture having an indexing section with corresponding shape. If the holding portion of the fixture is a socket, the dimensions of the engagement portion at an apically provided plane should be smaller than the dimensions of the engagement portion at a coronally provided plane and the shapes of the engagement portion at these two different planes should not be the same. If the holding portion of the fixture is a post, the dimensions of the engagement portion at a coronally provided plane should be smaller than the dimensions of the engagement portion at an apically provided plane and the shapes of the engagement portion at these two different planes should not be the same

Preferably the two planes are substantially perpendicular to the longitudinal axis of the dental component and are parallel to each other.

Providing a dental component with an engagement portion having the above-described characteristics increases the possibilities in choosing how many different rotational positions the dental component may be arranged in a corresponding dental fixture. Depending on the design of the engagement portion at each of the two planes as well as the combined design of them, the dental component may e.g. be received in any one of two alternative positions or in only one position. Furthermore, by providing and engagement portion having different shapes along its longitudinal extension, the design at each of the planes may be rather simple, as compared to a dental component having the same functionality but embodied in only one plane or in an engagement portion having the same shape throughout its length. This is beneficial in terms of construction and production.

The dental component may be any component selected from the group consisting of an abutment, an abutment blank, an abutment replica, a driver, a healing cap and an impression pick-up element.

According to at least one example embodiment, the engagement portion comprises a substantially cylindrical section. According to at least one example embodiment, the engagement portion comprises an apically tapering portion.

According to at least one example embodiment, the shape of the mating contour of the engagement portion is complementary to the shape of the indexing sections, respectively, of the different alternative embodiments described above of the dental fixture.

According to at least one example embodiment, the shape of the mating contour of the engagement portion at at least one of said first and second planes individually allow the dental component to be positioned in a plurality of positions in a dental fixture adapted to be inserted into a jawbone.

It may be preferable, in terms of freedom of choice and simple production, that the engagement portion has, at least at one of said planes, a rather uncomplicated regular shape that, if not the shape of the engagement portion at the other plane was present, would allow the dental component to be positioned in a multitude of alternative positions in the fixture.

According to at least one example embodiment, the shapes of the mating contours of the engagement portion at said first and second planes are arranged and configured such that the dental component may only be positioned in one position in a dental fixture adapted to be inserted into a jawbone.

It may be preferable, in terms of freedom of choice and simple production, that the engagement portion at each of the two planes has a rather uncomplicated regular shape that, if not the shape at the other plane was present, would allow the dental component to be positioned in a multitude of alternative positions in the fixture. However, by in a suitable manner choosing the shape at each of the planes, it is possible to provide a combination that only allows a single position of the dental component in the fixture. Such a configuration simplifies for a dental practitioner when inserting a dental component having only one preferred rotational orientation in relation to the dental fixture in a dental fixture. This may e.g. be the case where the dental component is a customized or contoured abutment, or a driver having a marked indication for assisting in positioning the dental fixture in a correct position in the user's bone.

According to at least one example embodiment, the shape of the mating contour of the engagement portion at at least one of said first and second planes of the engagement portion is individually arranged and configured to allow the dental component to be positioned in only one position in a dental fixture adapted to be inserted into a jawbone.

Providing the shape of the engagement portion at one of the planes to only allow a single position in a dental fixture simplifies for a dental practitioner when inserting a dental component having only one preferred rotational orientation in relation to the dental fixture in a dental fixture. This may e.g. be the case where the dental component is a customized or contoured abutment, or a driver having a marked indication for assisting in positioning the dental fixture in a correct position in the user's bone.

According to at least one example embodiment, the mating contour of the engagement portion at at least one of said first and second planes of the dental component has the shape of a polygon.

Polygons are shapes that are beneficial to use in terms of construction and production. Furthermore, they provide a beneficial rotational locking once the dental component has been inserted into a fixture having a socket with corresponding polygonal shape.

According to at least one example embodiment, the mating contour of the engagement portion has a polygonal shape at both said first and second planes.

Besides the benefits mentioned above for using polygonal shapes, it is also possible to combine polygonal shapes so that a dental component having an engagement portion as described above may be received in either one rotational position or in any one of two rotational positions or in any one of a multitude of rotational positions in a fixture having a socket with corresponding polygonal shapes.

According to at least one example embodiment, at least one or both of said polygonal shapes are chosen from a group consisting of triangles, tetragons, pentagons, hexagons, heptagons, octagons, nonagons, and decagons.

It is to be noted that the sides of the polygons may, but need not, have a straight extension. It is for example also conceivable with slightly curved sides as long as the major polygonal shape remains. Furthermore, the corners of the polygons may, but need not, be distinct corners. It is for example also conceivable with rounded corners.

According to at least one example embodiment, the engagement portion is arranged and configured such that the number of sides of it at one of the planes is not a multiple integer of the number of sides of it at the other plane of said at least two planes.

Providing an engagement portion having the shape of a polygon at one plane and the shape of another polygon at a second plane, and where the number of sides of one of the polygons is not a multiple integer of the number of sides of the other polygon gives good indexing possibilities for the dental practitioner. A dental component having this configuration will then only be possible to arrange in one or two different rotational positions in a fixture with an indexing section having a shape corresponding to the shape of the engagement portion at the first and second planes, respectively. If two rotational positions are available, the rotational positions are separated 180° degrees from each other. In the case of the dental component being e.g. a contoured or customized abutment, the dental practitioner will easily identify that the abutment is positioned 180° wrong and hence, be able to rotate the abutment to the correct position.

According to at least one example embodiment, the engagement portion is arranged and configured such that the number of sides of it at one of said planes is an even number and the number of sides of it at the other one of said planes is an uneven number.

Such a configuration allows a dental component to be positioned in only one rotational position in a dental fixture with an indexing section having a shape corresponding to the shape of the engagement portion at the first and second planes, respectively.

According to at least one example embodiment, the shape of the mating contour of the engagement portion differs between adjacent planes, thereby creating a continuous transformation from the shape of the engagement portion at the most coronally provided plane to the shape of the engagement portion at the most apically provided plane.

It is for example possible to consider an engagement portion having at a most coronally located plane the shape of a polygon and at a most apically located plane the shape of another polygon. The shape of the engagement portion may then gradually, as seen in coronal-apical direction, transform from the first polygon to the second polygon.

According to at least one example embodiment, the engagement portion comprises a multitude of positioning planes, wherein each plane has a shape differing from the shape of adjacent positioning planes, thereby creating a continuous transformation from the shape of the most coronally provided positioning plane to the shape of the most apically provided positioning plane.

It is for example possible to consider a dental component having a most coronal positioning plane having the shape of a polygon and a most apical positioning plane having the shape of another polygon. The shape of the engagement portion may then gradually, as seen in coronal-apical direction, transform from the first polygon to the second polygon.

According to at least one example embodiment, the shape of the mating contour of the engagement portion at one plane is the same as the shape of the mating contour at another plane adjacent to said one plane.

According to at least one example embodiment, the shape and dimension of the mating contour of the engagement portion at one plane is the same as the shape and dimension of the outer contour at another plane adjacent to said one plane.

Hence, for these embodiments, at least some planes may be located or taken adjacent planes having the same shape and in certain embodiments also the same size. It is for example possible to consider an engagement portion having a coronal portion, i.e. a portion of the engagement portion having an axial extension as seen in apical-coronal direction such that it contains a plurality of planes, having e.g. a polygonal shape. This section may then be either cylindrical or conical. The engagement portion may furthermore comprise an apical portion, i.e. a portion having an axial extension as seen in apical-coronal direction such that it contains a plurality of planes, having another polygonal shape or any other shape such as e.g. a collar being provided with a recess. Also this portion may then be either cylindrical or conical. In these embodiments, the coronal and apical sections may be connected to each other through e.g. a gradual transformation of the first shape to the other shape as described above or e.g. through a stem having e.g. a cylindrical or conical shape.

According to at least one example embodiment, said engagement portion comprises at least two discrete elements that are connected to each other, and wherein one of said at least two discrete elements is provided at said first plane and the other one of said at least two discrete elements is provided at said second plane.

According to at least one example embodiment, said engagement portion comprises a recess. A recess provided at the engagement portion of the dental component and adapted for engagement with a corresponding protrusion of the dental fixture is a simple and beneficial manner in providing the desired indexing functionality. With this configuration, the dental component may only be received in one rotational position in the fixture.

According to at least one example embodiment, said recess is provided at said second plane of said engagement portion.

According to one example embodiment, said engagement portion is provided with a collar at the apical end portion of the dental component, and wherein said collar is provided at said second plane. According to another example embodiment, said collar is provided at the coronal end portion of the dental component's engagement portion. A dental component with any of these configurations may only be received in a fixture in one defined rotational position, if the dental fixture has an indexing section with a corresponding groove. However, it is also easy to adapt the dental component to become a multi-position dental component by removing the collar.

According to at least one example embodiment, the collar is substantially cylindrical.

According to one example embodiment, the mating contour of said engagement portion is provided at the outer surface of a post portion. Hence, a dental component with this configuration may suitably be received with by a dental fixture being provided with a holding portion in the form of a socket.

According to one example embodiment, the outer circumference of the engagement portion at the apically located plane has dimensions such that it is able to be circumscribed in the outer circumference of the engagement portion at the coronally located plane. The reason that the outer circumference of an apically provided plane should be able to be circumscribed in the outer circumference of a coronally provided plane is that the apical end of the engagement portion of the dental component should be able to pass through a coronally provided portion of an indexing section of a dental fixture before it engages an apically provided indexing portion of the fixture.

According to one example embodiment, the mating contour of said engagement portion is provided at an inner surface of a post portion being provided with a bore. Hence, a dental component with this configuration may suitably be received by a dental fixture having a holding portion in the form of a post with mating surfaces provided on the outer circumference of said post.

According to one example embodiment, the outer circumference of the engagement portion at the coronally located plane has dimensions such that it is able to be circumscribed in the outer circumference of the engagement portion at the apically located plane. The reason that the outer circumference of a coronally provided plane should be able to be circumscribed in the outer circumference of an apically provided plane is that the apical end of the engagement portion of the dental component should be able to pass a coronally provided portion of an indexing section of a dental fixture before it engages an apically provided indexing portion of the fixture.

That the outer circumference of an plane is able to be circumscribed in the outer circumference of another plane for the alternative embodiments mentioned above does not necessarily imply that the shape of the two planes are the same. It does also not imply that the apically provided plane is smaller than the coronal plane, they may have the same size.

According to one example embodiment, the dental component is in the form of an abutment comprising a body part and a screw part, wherein the body part comprises
- said engagement portion,
- a prosthesis-receiving portion which extends coronally of the fixture, and
- a through hole extending through the body part,
wherein the screw part is adapted to be inserted into the through hole and engage an internal thread of a fixture in order to secure the body part to the fixture.

According to a third aspect of the invention, a dental implant assembly is provided. The dental implant assembly comprises a dental component according to the second aspect of the invention, which is connected to or which is to be connected to a fixture according to the first aspect of the invention, wherein the dental component only has one or two possible indexing (i.e. rotational) positions relative to the fixture.

In the case of a contoured fixture, the fixture comprises a buccal side and a lingual side, wherein in the implanted state, the dental component is adapted to be arranged in a predetermined rotational position relative to the fixture.

If said dental component is a driver, it may be provided with a distinctive visual marking to indicate the relative position with respect to the buccal side. This helps the user to insert the fixture in an appropriate rotational position relative to the jawbone. At the coronal end, the fixture may suitably have a longer extension on the lingual side compared to the buccal side.

According to a fourth aspect of the invention, a dental implant assembly is provided. The dental implant assembly comprises a dental fixture according to a first aspect of the present invention, and a dental component being provided with an engagement portion which at one plane thereof has a mating contour with a shape corresponding to the shape of the mating contour of the indexing section of the holding portion at either the first or the second plane of said indexing section, thereby enabling the dental component to be positioned in any one of a plurality of indexing positions relative to the fixture.

Depending on the shape of the indexing section at the first and second planes thereof, the dental component may be configured to be received in any one of a plurality of alternative positions. Furthermore, it is possible to provide the dental component with an engagement portion having a shape corresponding to the shape at either the first or second plane of the dental fixture. Hence, one type of dental component may be provided with an engagement portion with a shape corresponding to the shape at the first plane and another type of dental component may be provided with an engagement portion having a shape corresponding to the indexing section at the second plane.

It should be understood that in the present disclosure, a dental implant may comprise a dental fixture and a superstructure, such as an abutment.

A dental fixture is for use as the anchoring member of a dental prosthesis. To this end, the dental fixture is insertable into a pre-prepared bore hole in the bone tissue of a jawbone (maxilla or mandible) at a site where the dental prosthesis is required. The dental fixture is normally rotated into the bore hole.

For screw-type dental fixtures the bore hole may be provided with internal threads in advance or may be left un-tapped with the dental fixture provided with a self-tapping capacity, e.g. by the provision of one or more axially-extending cutting recesses, edges or notches, etc in the fixture thread. For instance, an apical end portion of the fixture may be provided with 2-4 cutting recesses, such as 3 cutting recesses. Other number of cutting recesses is readily conceivable.

A superstructure for connecting a prosthetic part to the fixture may comprise an abutment, spacer or other transmucosal component which engages to the dental fixture to bridge the gingiva overlying the maxilla or mandible. The prosthetic part, e.g. a crown, bridge or denture may be secured to the abutment. There are various other forms that the superstructure can take. For instance, the prosthetic part may be secured directly to the dental fixture. A dental implant may thus comprise an abutment connected to the dental fixture, or the dental fixture without an abutment.

The term "coronal" is here and throughout this application used to indicate a direction towards a head end or trailing end of the dental implant. For instance, in a situation where an abutment is connected to a dental fixture, the coronal direction of the abutment would be a direction towards the part of the abutment being directed away from the fixture. Conversely, the term "apical" indicates a direction towards an insertion end of the component. Thus, apical and coronal are opposite directions. Furthermore, the term "axial direction" or "axially" is used throughout this application to indicate a direction taken from the coronal end to the apical end, or vice versa. The term "radial direction" or "radially" indicates a direction perpendicular to the axial direction.

A blind bore or socket may extend apically into the fixture body from the coronal end to an end surface in-between the apical and coronal ends of the fixture body for a superstructure to be secured to the fixture. The socket may comprise an internally-threaded section for screw connection of the superstructure to the fixture. A section of the socket, such as the coronal section, may be tapered towards the apical end. The tapered section is suitably arranged coronally of the internally-threaded section.

The above exemplified embodiments have taught that the radially projecting recesses may be provided on an internal wall in a fixture socket, wherein the engagement portion of a dental component is adapted to be received in said socket. Exemplified alternatives have taught that the recesses may be provided on an external wall of a head portion which is to be enclosed by a dental component connectible to the fixture. Although this internal/external distinction has been made between socket and head portion, it should be noted that a head portion does not necessarily have an outer wall for receiving the engagement portion. On the contrary, a head portion may be provided with an internal socket. Thus, any of the above exemplified embodiments discussing a socket may be in the form of a socket in a head portion of a dental fixture.

The fixture may be used in a one stage procedure or a two stage procedure. In a one stage procedure a healing or temporary abutment is connected to the fixture to form the gingival tissue, and after a healing period the healing or temporary abutment is replaced by a permanent abutment. For a two stage procedure the fixture is provided with a cover screw and the gingival tissue is sutured over the fixture and cover screw, and after a healing period the tissue is opened up and an abutment is connected to the fixture after removal of the cover screw.

The fixture may have a conically tapering end portion which tapers towards the coronal end. The axial extent of this coronal end portion is small compared to the total length of the fixture, as an example no more than 4 % of the total length, such as in the range of 1.5% -3.7%. The coronal end portion may suitably be provided without a threaded surface, e.g. having a smooth or a roughened (such as blasted) surface.

As previously discussed with regard to the various aspects of the invention, the fixture may have a substantially flat coronal end surface which is perpendicular to the longitudinal axis of the fixture. Alternatively, the coronal end surface may have a sloped contour relative to the longitudinal axis of the fixture, e.g. such that when positioned within the jawbone the length of the fixture is larger on a lingual side and shorter on a buccal side of the fixture. Another alternative is a saddle-shaped or wave-like coronal end surface.

The length of the dental fixture may be in the range of 5-19 mm, depending on the clinical situation. The outer diameter of the dental fixture may suitably be in the range of 2-6 mm, such as 3-5 mm.

The fixture may be substantially cylindrical or slightly tapering from the coronal end towards the apical end. If the fixture has a slight tapering, the core of the fixture and the outer periphery defined by e.g. thread tops may have the same or different angle of taper. Furthermore, the core of the fixture may be cylindrical while the thread tops describe a conicity or, conversely, the core of the fixture may be tapered while the thread tops describe a generally cylindrical geometry. Alternatively, the fixture may comprise a combination of one or more cylindrical and/or one or more tapering portions. Thus, one or more portions of the fixture may have e.g. thread tops lying in a common imaginary cylindrical surface, which cylindrical surface is parallel with the longitudinal axis of the fixture. Alternatively or additionally, one or more portions of the fixture may have thread tops lying in an imaginary conical surface which in the apical direction is tapering towards the longitudinal axis.

The externally threaded fixture may comprise one or more thread spirals.

The term "pitch" is used to indicate the axial distance between adjacent tops of a threading. The term "lead" is used to indicate the distance advanced parallel to the longitudinal axis when the fixture is turned one revolution, i.e. it corresponds to the pitch multiplied with the number of thread spirals. For a single thread spiral having a constant pitch, the lead is equal to the pitch; for a double thread spiral, the lead is twice the pitch.

The term "microthread" is used to indicate a thread having a height which is no greater than 0.2 mm. According to at least one example embodiment, the fixture is provided with microthreads having a height in the range of 0.02-0.2 mm, such as 0.05-.015 mm, for instance 0.1 mm. The term "macrothread" is used to indicate a thread having a height which is greater than 0.2 mm. According to at least one example embodiment, the fixture is provided with macrothreads having a height in the range of 0.25-0.35 mm, such as 0.3 mm.

Suitably, microthreads may be located coronally of macrothreads. For instance, microthreads may be arranged to engage dense cortical bone and macrothreads may be arranged to engage porous spongious/cancellous bone. The lead of a microthread suitably corresponds to the lead of a macrothread. The macrothread pitch may, as an example, be 2-4 times, such as 3 times, the pitch of the microthreads. The pitch (top-to-top spacing) at a fixture portion provided with microthreads may be around 0.20-0.24 mm. The pitch (top-to-top spacing) at a fixture portion provided with macrothreads may be around 0.60-0.72 mm.

Microthreads can be regarded as defined, oriented roughness. A non-oriented roughness having smaller dimensions, for instance obtained by blasting, etching, etc., may be superimposed on microthreads as well as on macrothreads.

A thread profile comprises two flanks, a top radius R, at the apex formed between the intersection of said two flanks, a bottom radius r formed between two adjacent threads, said flanks forming an angle v with a plane which is perpendicular to a cross section of said thread and perpendicular to a plane which is a tangent to the surface of the fixture body, said profile further having a height D. Suitably for 10° ≤ v < 35 °, R is greater than 0.4 x D and, for 35° ≤ v < 55 °, R is greater than 0.2 x D.

### Brief description of the drawings

Figs. 1a-c illustrate an implant assembly according to at least one example embodiment of the invention in perspective view, side view and in top view of the fixture, respectively.
Figs. 2a-c illustrate an implant assembly according to at least one example embodiment of the invention in perspective view, side view and in top view of the fixture, respectively.
Figs. 3a-c illustrate an implant assembly according to at least one example embodiment of the invention in perspective view, side view and in top view of the fixture, respectively.
Figs. 4a-c illustrate an implant assembly according to at least one example embodiment of the invention in perspective view, side view and in top view of the fixture, respectively.
Figs. 5a-c illustrate an implant assembly according to at least one example embodiment of the invention in perspective view, side view and in top view of the fixture, respectively.
Figs. 6a-c illustrate an implant assembly according to at least one example embodiment of the invention in perspective view, side view and in top view of the fixture, respectively.
Figs. 7a and 7b illustrate dental components according to at least one example embodiment of the invention.
Figs. 8a-c illustrate an implant assembly according to at least one example embodiment of the invention in perspective view, side view and in top view of the fixture, respectively.
Fig. 9 illustrate an implant assembly according to at least one example embodiment of the invention in perspective view.
Figs. 10a and 10b illustrate drivers with engagement portions according to at least two example embodiments of the invention, respectively.
Figs.11 a and 11 b illustrate, in perspective view, dental fixtures, a dental component and a dental driver according to further alternative embodiments of the invention.

### Detailed description of the drawings

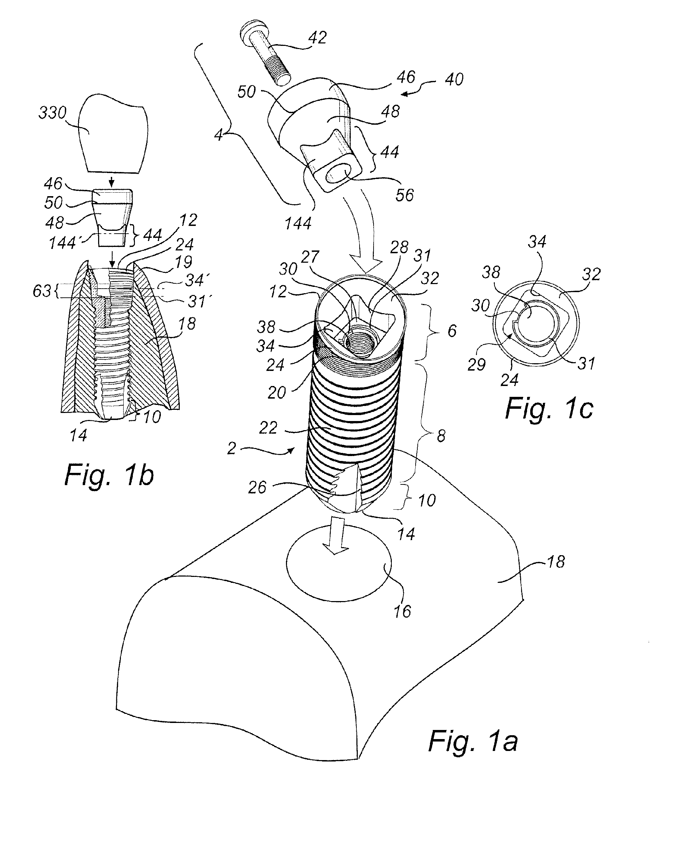

Figs. 1a-1c illustrate an implant assembly according to at least one example embodiment of the invention. The implant assembly comprises a dental fixture 2 and a dental component 4, herein illustrated as a two-piece abutment.

The herein illustrated fixture 2 has a coronal portion 6 extending apically from a coronal end 12 of the fixture 2, and an apical portion 10 extending coronally from an apical end 14 of the fixture. An intermediate portion 8 extends between the coronal portion 6 and the apical portion 10. The implant in this embodiment is a subgingival implant and the coronal portion 6, the intermediate portion 8 and the apical portion 10 constitutes a bone apposition portion adapted to be submerged into the bone tissue.

The apical portion 10 has a conicity tapering towards the apical end 14 of the fixture 2 to ease insertion of the fixture 2 into a bore-hole 16 in a jawbone 18. The angle of taper relative to the longitudinal axis of the fixture 2 may, for instance, be about 10°-20°, such as 15°. Although Fig 1 illustrates a non-threaded apical portion 10, in an alternative embodiment the apical portion of the fixture may be provided with an external thread. Whether provided with thread or not, the apical portion 10 may optionally, similarly to the coronal portion 6 and/or the intermediate portion 8, further be provided with a blasted, etched or otherwise roughened surface structure.

The fixture 2 has a core from which a surface structure projects, in the illustrated example being in the form of threads.

The coronal portion 6 is herein illustrated as being at least partly provided with microthreads 20, having three thread spirals, although another number is conceivable, such as 1, 2, 4 or more. Although microthreads 20 have been illustrated, according to at least an alternative example embodiment the coronal portion is at least partly provided with macrothreads 22, similarly to the intermediate portion 8, either as a separate thread spiral or as a continuation of the thread spiral at the intermediate portion 8. According to at least another alternative example embodiment, instead of microthreads, the coronal portion may be provided with a plurality of annular ridges, which to the naked eye could give the same visual appearance as microthreads. Other conceivable alternatives are circumferential lines of beads or non-oriented/randomly provided projections such as bulges.

In the illustrated example embodiment, the macrothreads 22 at the intermediate portion 8 has the same lead as the microthreads 20 at the coronal portion 6. However, the pitch of the macrothreads 22 is three times the pitch of the microthreads 20, since the microthreads 20 comprise three thread spirals.

The length of the herein illustrated coronal portion 6 may be about 1-2 mm, such as 1.5 mm. However, shorter or longer lengths are readily conceivable. The relative length of coronal portion 6 may also be selected from a wide range, such as 5-50% of the total length of the fixture 2, e.g. 10-20%.

The coronal portion 6 comprises a tapering end portion 24, which tapers towards the coronal end 12 of the fixture 2. The tapering end portion 24 is no more than 4% of the total length of the fixture 2. The surface of the tapering end portion 24 may be non-threaded, either smooth or blasted (or otherwise roughened).

The intermediate portion 8 comprising macrothreads 22 is herein illustrated as having one thread spiral, however, the intermediate portion 8 may alternatively have two or more thread spirals. Similarly, although illustrated as having a substantially straight cylindrical shape, the intermediate portion 8 may have a slightly tapering shape towards the apical portion 10, in which case the angle of taper may e.g. be 3° or less, such as about 1°-2°.

Cutting recesses 26 or groove extends from the apical end into the intermediate portion. The number of cutting recesses 26 may be one or more, such as two, three or four cutting recesses, suitably symmetrically positioned about the circumference of the apical end 14 of the fixture 2 for self-tapping of the fixture 2 when being screwed/rotated into the bore-hole 16 provided in the maxilla or mandible.

A socket 28 having an open end is provided in the coronal end 12 of the fixture 2. The socket 28 extends apically into the fixture 2. The socket 28 constitutes a holding portion for receiving a dental component such as the illustrated abutment 4 which will bridge the gingiva 19 overlying the bore-hole and support/present a prosthetic part 30. However, it may also receive other dental components such as an abutment replica, a driver, a healing cap and an impression pick-up element.

Although various alternative configurations are conceivable, the socket 28 is in Fig 1 illustrated as having a conical coronal section 32 and an indexing section 63 comprising a first and a second indexing portion. The first indexing portion 34 is in the form of a coronal substantially square-shaped intermediate wall section and the second indexing portion 29 is in the form of an apical groove 31 provided at the bottom of the socket 28. Hence, the groove 31 is provided apically of the substantially square-shaped first indexing portion 34. The socket 28 is further provided with an internally threaded apical section 38. The groove 31 is substantially circular and circumscribes the larger part of the internally threaded apical section 38, but with a portion of the bottom 27 of the socket 28 not being cut out, thereby forming a protrusion 30.

As an alternative, the first indexing portion 34, i.e. the intermediate wall section, may be non-tapering. Further as an alternative, the intermediate wall section may be substantially conical.

As is illustrated in Fig 1b, the indexing section 63 has an extension as seen in the longitudinal extension of the fixture. A first plane 34' may be considered to be located so that it intersects the indexing section 63 at the coronal substantially square-shaped wall section forming the first indexing portion 34 and a second plane 31' of the indexing section may be considered to be located so that it intersects the indexing section at the height of the groove 31.

The dental component 4 is herein illustrated as a two-piece abutment consisting of a body part 40 and a screw part 42. The body part 40 comprises an engagement portion 44 in the form of a substantially square-shaped positioning portion 144. The body part 40 further comprises a dental crown-receiving or prosthesis-receiving portion 46 which extends coronally of the fixture 2 above the gingiva 19. An extension portion 48, herein illustrated as conically flaring up to a shoulder 50, is intended to extend through the gingiva 19 and is provided between the engagement portion 44 and the prosthesis-receiving portion 46. A part of the extension portion 48 will also engage the conical coronal section 32 of the fixture during use and may therefore be considered to form part of the engagement portion as well.

As is illustrated in Fig 1b, the engagement portion 44 has an extension as seen in the longitudinal extension of the dental component. A first plane 144' may be considered to be located so that it intersects the engagement portion at the substantially square-shaped portion forming the first positioning portion 144.

The body part 40 of the abutment 4 is provided with a through-hole 56, wherein the screw part 42 is adapted to be inserted into the through-hole 56 and engage the internal thread of the internally threaded apical section 38 of the fixture 2 in order to secure the body part 40 to the fixture 2.

In use, the fixture 2 is inserted into a bore hole 16 in a jawbone 18, as schematically illustrated in Figs. 1a-b. In Fig 1, since the coronal end 12 of the fixture 2 is flat, which is clearly seen in Fig 1b, the fixture 2 has no preferred rotational installed position with respect to the jawbone 18. Next, the body part 40 of the abutment 4 is inserted into the installed fixture 2, by inserting the square-shaped positioning portion 144 of the engagement portion 44 into the corresponding socket 28 of the fixture so that positioning portion 144 engages the indexing portion 34. Due to the symmetrical square-shape, four different rotational positions of the abutment are conceivable. No part of the abutment 4 engages the groove 31 of the socket.

Although not specifically illustrated in the figure, the prosthesis-receiving portion 46 could be angled relative to the axis of the through hole 56. In such case, the user, such as a dentist, would be able to select which one of the four indexing positions provides the best orientation for the angled prosthesis-receiving portion 46. Likewise, if the prosthesis receiving portion is designed custom-fit and has a patient-specific configuration, the user will be able to arrange the abutment 4 in a desired indexing position with respect to the fixture. Although, four alternative rotational positions in the socket may be quite enough in many surgical applications, it is conceivable to provide the socket and the engagement portion of the abutment with other shapes, such as pentagons, hexagons, heptagons, octagons, and so on, to allow further indexing positions.

After the body part 40 has been arranged in the desired rotational indexing position relative to the fixture 2, and the corresponding interfaces of the engagement portion and the indexing section of the socket has provided a rotational lock, the screw part 42 is inserted into the internally threaded apical section 38 of the fixture 2 and is tightened. Finally, as illustrated in Fig. 1b, a prosthetic tooth 330 is attached to the abutment 4.

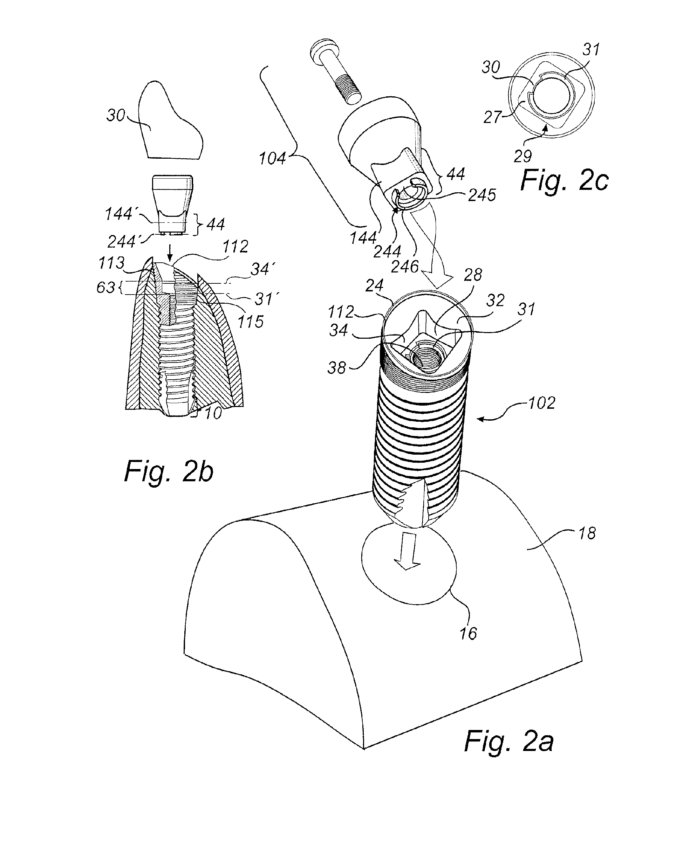

Figs. 2a-c illustrate an implant assembly according to at least one other example embodiment of the invention. The implant assembly comprises an abutment 104 which has many details in common with the abutment illustrated in Figs. 1a-c. The details being similar to the ones illustrated in Fig. 1 will not be mentioned for this example embodiment.

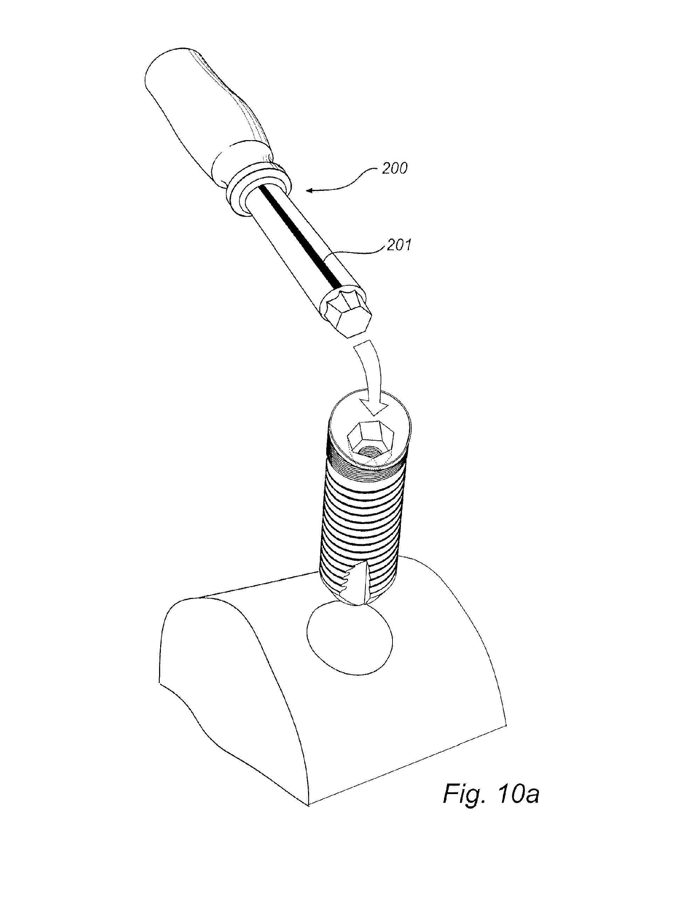

However, the fixture 102 in Figs. 2a-c is in certain aspects different from the fixture illustrated in Figs. 1a-c. The fixture in this embodiment has a sloped coronal end 112, wherein a lingual side 113 has a longer extension than a buccal side 115. When the fixture has been installed in a bore hole 16 in the jawbone 18, the coronal end 112 should follow the sloped contour of the jawbone 18, as is illustrated in Fig. 2b. Thus, the fixture 102 has a desired rotational position relative to the jawbone 18. A driver 200, such as illustrated in Figs. 10a-b, may be provided with a distinctive visual marking 201 and be received in only one indexing position relative to the fixture 102. The marking 201 will thus indicate to the user the direction of the sloping coronal end 112 as the fixture 102 is being driven into the jawbone 18 and the final rotational position of the fixture 102 may be easily adjusted when looking at the distinctive marking 201.

Continuing with Figs. 2a-c, the engagement portion 44 of the dental component 104 has a first substantially square-shaped positioning portion 144. Hence, the first positioning portion 144 is similar to the first positioning portion 144 of the abutment 4 illustrated in Figs. 1a-c. However, the engagement portion 44 is further provided with a second positioning portion 244 at the apical end of the abutment. The second positioning portion is in this embodiment in the shape of a circular collar 246 being provided with a recess 245. The outer diameter of the second positioning portion 244 is somewhat smaller than the outer boundaries of the first positioning portion 144. The reason for this being that the second positioning portion should be able to pass through the first indexing portion 34 of the indexing section 63 of the socket 28 without interference.

As can also be seen in Figs. 2a-b, the second indexing portion 29 of the fixture 102 is, similar to what has been described above for the fixture 2 in Figs. 1a-c, in the form of a groove 31 corresponding to the shape of the second positioning portion 244. Hence, the second indexing section 29 is provided at the bottom of the socket 28 and in the form of a substantially circular groove 31, but with a portion of the bottom 27 of the socket 28 not being cut out, thereby forming a protrusion 31. Consequently, the abutment 104 may only be received in one position in the fixture 102.

A first plane 34' of the indexing section 63 may be considered to be located so that it intersects the indexing section 63 at the first indexing portion 34 and a second plane 31' of the indexing section may be considered to be located so that it intersects the indexing section at the second indexing portion 29. Similarly, a first plane 144' of the engagement portion 44 may be considered to be located so that it intersects the engagement portion at the first positioning portion 144 and a second plane 244' may be considered to be located so that it intersects the engagement portion at the second positioning portion 244.

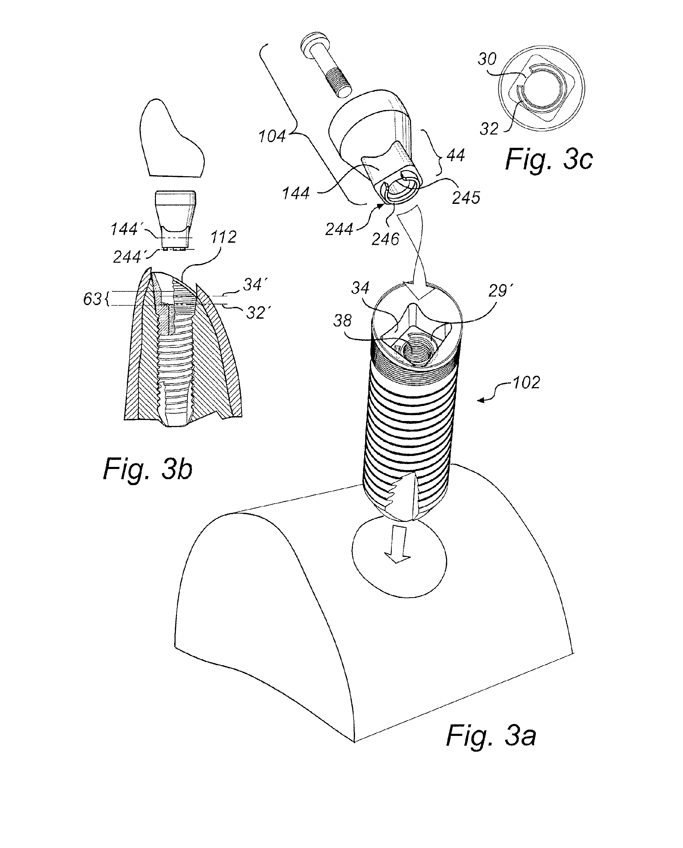

An alternative embodiment of the implant assembly and in particular the fixture 102 is disclosed in Figs. 3a-c. The dental component 104 is similar to the dental component illustrated in Figs. 2a-c. Most aspects of the fixture, including the first indexing portion 34 of the indexing section 63, are similar in this embodiment as in the embodiment illustrated in Figs. 1 and 2. Details being similar to the above-described embodiments will not be mentioned again.

However, the second indexing portion 29' is in this embodiment not a groove but a cut-out and is denoted with reference 32. The cut-out has outer contours matching the second positioning portion 244 of the abutment 104, i.e. matching the contours of the collar 246 and the cut-out 245. In other words, the difference between the groove 31 and the cut-out 32 is that the cut-out 32 does not have a wall or boundary delimiting it from the apically threaded portion 38 of the socket. Hence, also this fixture may only receive a dental component having a tetragon as a first positioning portion and a collar with a recess as a second positioning portion in one rotational indexing position. By this, the user is prevented from selecting an orientation of the abutment which would be less appropriate with regard to the specific configuration of the jawbone and the gingiva.

Also in this embodiment may a first plane 34' of the indexing section 63 be considered to be located so that it intersects the indexing section 63 at the first indexing portion 34 and a second plane 32' of the indexing section may be considered to be located so that it intersects the indexing section at the second indexing portion 29'. Similarly, a first plane 144' of the engagement portion 44 may be considered to be located so that it intersects the engagement portion at the first positioning portion 144 and a second plane 244' may be considered to be located so that it intersects the engagement portion at the second positioning portion 244.

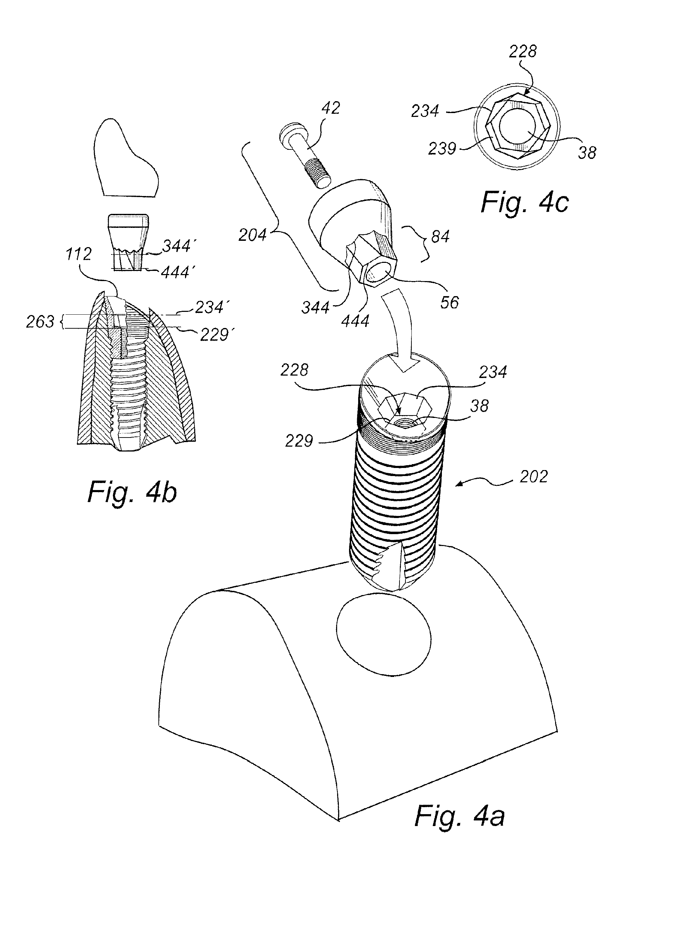

Figs. 4a-c illustrate a dental implant assembly according to another example embodiment. The dental component 204 illustrated in Figs. 4a-c has most features in common with the dental components 4, 104 described in relation to Figs. 1 ― 3. Details similar to the above-described dental components will not be mentioned again.

However, the dental component 204 is provided with an alternative embodiment of the engagement portion 84. The engagement portion 84 comprises an external octagon an external hexagon. As may be seen in Figs. 4a-c, the octagon and hexagon of the engagement portion 84 are not discrete from each other and instead, the octagon transforms into the hexagon along the length of the engagement portion 84. A first plane 344' of the engagement portion 84 may be considered to be located so that it intersects the engagement portion at the coronal end of the engagement portion, i.e. where the engagement portion has an octagonal shape. This portion of the engagement portion 84 is denoted with reference number 344 and forms a first positioning portion. A second plane 444' at the engagement portion may be considered to be located so that it intersects the engagement portion at the apical end of the engagement portion, i.e. where the engagement portion has a hexagonal shape. This portion of the engagement portion is denoted with reference number 444 and forms a second positioning portion.

The fixture 202 illustrated in Figs. 4a-c has likewise most features in common with the fixtures 2, 102 illustrated in Figs. 1 ― 3. Also here, details similar to the above-described embodiments will not be mentioned again. However, the socket 228 of the fixture 202 is provided with an indexing section 263 in the form of a coronally located internal octagon that transforms into an apically located internal hexagon. A first plane 234' of the indexing section 263 may be considered to be located so that it intersects the indexing section at the coronal end of the indexing section, i.e. where the indexing section has an octagonal shape. This portion of the indexing section is denoted with reference number 234 and forms a first indexing portion. A second plane 229' at the indexing section may be considered to be located so that it intersects the indexing section at the apical end of the indexing section, i.e. where the indexing section has a hexagonal shape. This portion of the indexing section is denoted with reference number 229 and forms a second indexing portion.

The outer dimension of the engagement portion 84 is decreasing in the apical direction of the abutment. The reason for this being that the hexagon of the second positioning portion 444 shall be able to pass through the internal octagon of the first indexing portion 234 of the socket 228 without interference. The dimension of the socket is also decreasing in apical direction so that the engagement portion 84 of the abutment 304 fits tightly with the indexing section 263. This is clearly seen in Fig. 4c illustrating a top view of the fixture and in which the hexagon of second indexing portion 229 has dimensions so that it may be circumscribed in the octagon of the first indexing portion 234.

By this configuration, the fixture may receive the dental component in only two possible positions. This is clearly seen in Fig. 4c, in which the socket 228 is seen in top view. As is seen in the top view, the socket is mirror symmetrical. Hence, the two different alternative positions are rotated 180° in relation to each other. A dental practitioner may in the case of a contoured or customized abutment easily realize when the abutment is turned 180° wrong and arrange the abutment in the correct position before fastening it to the dental fixture by the abutment screw 42, through the internal bore 56 and the apically threaded section 38.

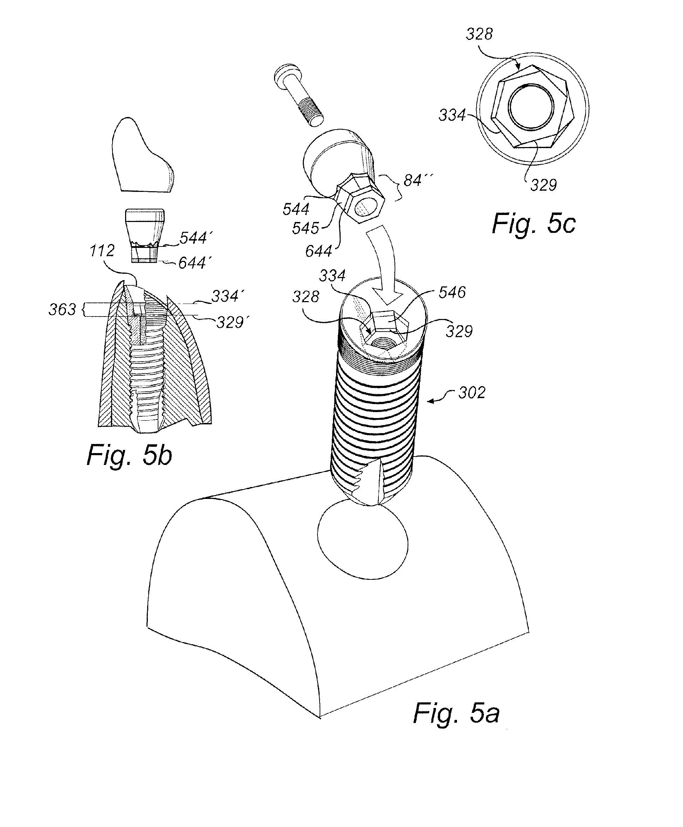

Figs. 5a-c illustrate yet another alternative embodiment of a dental implant assembly according to the present invention. The dental component and the fixture illustrated in Figs. 5a-c have most features in common with the dental components described in relation to Figs. 1 ― 4. Details similar to the above-described dental components will not be mentioned again.

The engagement portion 84" in this embodiment comprises an external heptagon and an external hexagon. As may be seen in Fig. 5a, the heptagon and hexagon of the engagement portion 84 are not discrete from each other and instead, the heptagon transforms into the hexagon along the length of the engagement portion 84. However, the heptagon has a similar shape along a portion of the length of the engagement portion 84" and this portion forms a first positioning portion 544. Also the hexagon has a similar shape along a portion of the length of the engagement portion 84" and this portion forms second positioning portion 644. An intermediate portion 545 connects the two positioning portions 544, 644. The first positioning portion 544 may have a cylindrical or conical outer surface and also the second positioning portion 644 may have a cylindrical or conical outer surface. However, the outer dimensions of the second positioning portion 644 should be smaller than the outer dimensions of the first positioning portion 544, so that the second positioning portion may be circumscribed by the first positioning portion. The intermediate portion 545 may also be either cylindrical or conical. In cases where all three portions are cylindrical, the decrease in dimensions may be step-wise.

A first plane 544' of the engagement portion 84" may be considered to be located so that it intersects the engagement portion at the coronal end of the engagement portion, i.e. somewhere where the first positioning portion 544 is located. A second plane 644' at the engagement portion may be considered to be located so that it intersects the engagement portion at the apical end of the engagement portion, i.e. somewhere where the second positioning portion 644 is located. It is, due to the fact that the first and second positioning portions 544, 644 has axial extensions, respectively, possible to consider several planes intersecting the respective positioning portions in which the engagement portion 84" has the same shape and eventually, in the case of cylindrical positioning portions, also dimensions.

The socket 328 of the fixture 302 has an indexing section 363 having first and second indexing portions 334, 329 and an intermediate section 546, with shapes corresponding to the first and second positioning portions and the intermediate portion of the engagement portion 84". Hence, the socket it adapted to receive the engagement portion 84" with a close fit and the outer dimensions of the second indexing portion 329 is smaller than the outer dimensions of the first indexing portion 334.

A first plane 334' of the indexing section 363 may be considered to be located so that it intersects the indexing section at the coronal end of the indexing section, i.e. somewhere where the first indexing portion 334 is located. A second plane 329' at the indexing section may be considered to be located so that it intersects the indexing section at the apical end of the indexing section, i.e. somewhere where the second positioning portion 329 is located. It is, due to the fact that the first and second indexing portions 334, 329 has axial extensions, respectively, possible to consider several planes intersecting the respective indexing portions in which the indexing section 363 has the same shape and eventually, in the case of cylindrical sections, also the same dimensions.

Due to the fact that a hexagon has an even number of sides/corners and a heptagon has an uneven number of sides/corners, the abutment may only be received in one single position in the fixture, this is clearly seen when studying the top view of the socket 328 in Fig. 5c.

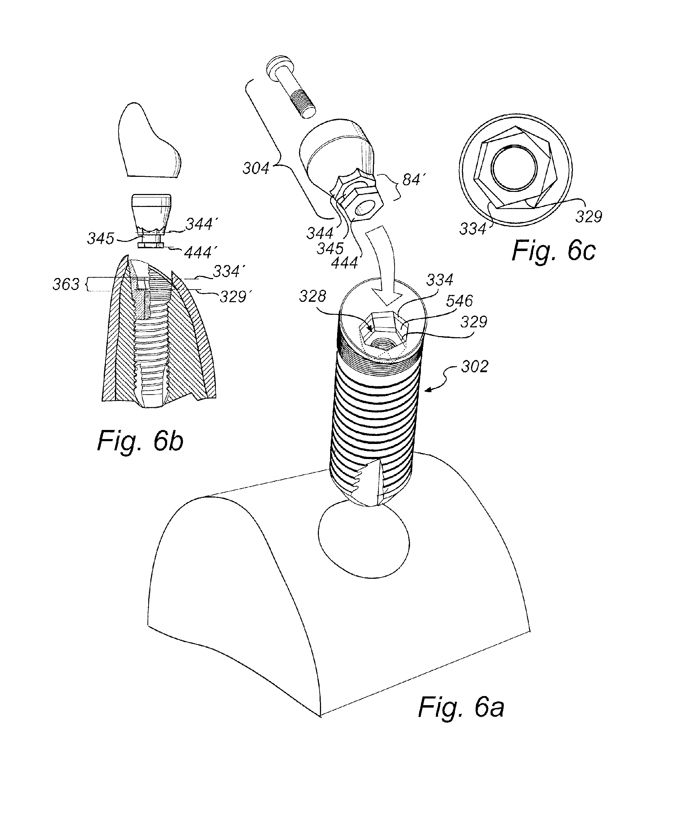

Figs. 6a-c illustrate another alternative embodiment of the dental implant assembly and in particular an alternative embodiment of the abutment 304. Once again, most features of the abutment are similar to the abutments described for the previous embodiments and these features will not be mentioned again. However, the engagement portion 84' differs somewhat. The engagement portion 84' has, similar to the abutment illustrated in Figs. 5a-c, a first positioning portion 344 in the form of an external heptagon and a second positioning portion 444 in the form of an external hexagon. However, in this embodiment the positioning portions are provided as separate elements and connected by a stem 345.

A first plane 344' of the engagement portion 84' may be considered to be located so that it intersects the engagement portion at the coronal end of the engagement portion, i.e. somewhere where the first positioning portion 344 is located. A second plane 444' at the engagement portion may be considered to be located so that it intersects the engagement portion at the apical end of the engagement portion, i.e. somewhere where the second positioning portion 444 is located. It is, due to the fact that the first and second positioning portions 344, 444 has axial extensions, respectively, possible to consider several planes intersecting the respective positioning portions in which the engagement portion 84" has the same shape and eventually, in the case of cylindrical portions, also dimensions.

The fixture 302, the socket 328 and its indexing section 363 is in the illustrated embodiment similar to the fixture illustrated in Figs. 5a-c. However, due to the fact that the engagement portion 84' does not present an intermediate portion 545 as compared to the embodiment in Figs. 5a-c, the indexing section does not need to present an intermediate section 546.

Hence, the abutment 304 may be, similar to the abutment illustrated in Figs. 5a-c, positioned in only one alternative position in the fixture 302.

The possibility to provide the engagement portion and the indexing section with separate elements or as one element that transforms from one shape into another shape along its longitudinal extension or as one element that has a first shape a second shape and an intermediate transforming section is of course not limited to octagons, heptagons and hexagons. Any embodiment of the present invention in which the engagement portions and indexing sections comprise two polygonal shapes may be provided as either separate elements or as shapes transforming into each other along the longitudinal extension of the engagement portion. Furthermore, also the embodiment described in relation to Figs. 5a-c, in which the first and second positioning portions and indexing portions have consistent extensions along a part of the engagement portion and the socket, respectively, and a transformation area in between, are conceivable for any polygonal shapes.

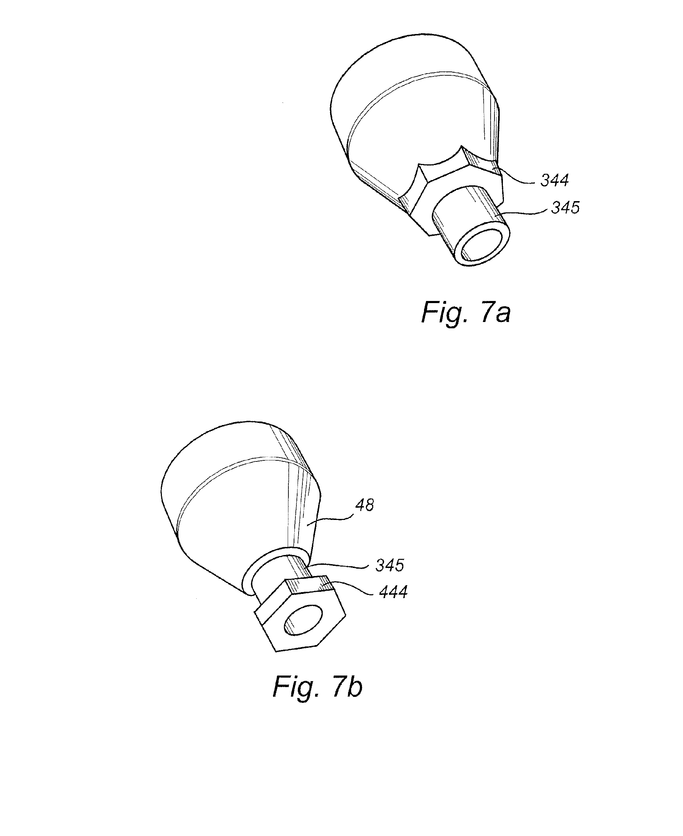

Two alternative abutment embodiments are illustrated in Figs. 7a and 7b. Features of the abutments not being mentioned are similar to the features of the previously described abutments. The alternative abutment illustrated in Fig. 7a is provided with only a first positioning portion 344 in the form of an external heptagon, i.e. corresponding to the shape of the first indexing portion 334 of the fixture illustrated in Figs. 5a-c and 6a-c. The second positioning portion is not present and instead the abutment is provided with a circular shaft or stem 345 protruding below the first positioning portion. The abutment may consequently be received in the fixture 302 illustrated in Figs. 5a-c and 6a-c in seven different positions.

The alternative abutment illustrated in Fig. 7b is provided with only a second positioning portion 444 in the form of an external hexagon, i.e. corresponding to the shape of the second indexing portion 329 of the fixture 302. The first positioning portion is not present and instead the abutment is provided with a circular stem or shaft protruding from the extension portion 48 down to the second positioning portion. The abutment may consequently be received in the fixture 302 illustrated in Figs. 5a-c and 6a-c in six different positions.

The possibility to provide an abutment with only the first or second positioning portion is of course not limited to heptagons and hexagons. Any embodiment of the present invention illustrated herein may be provided with only the first or second positioning portion.

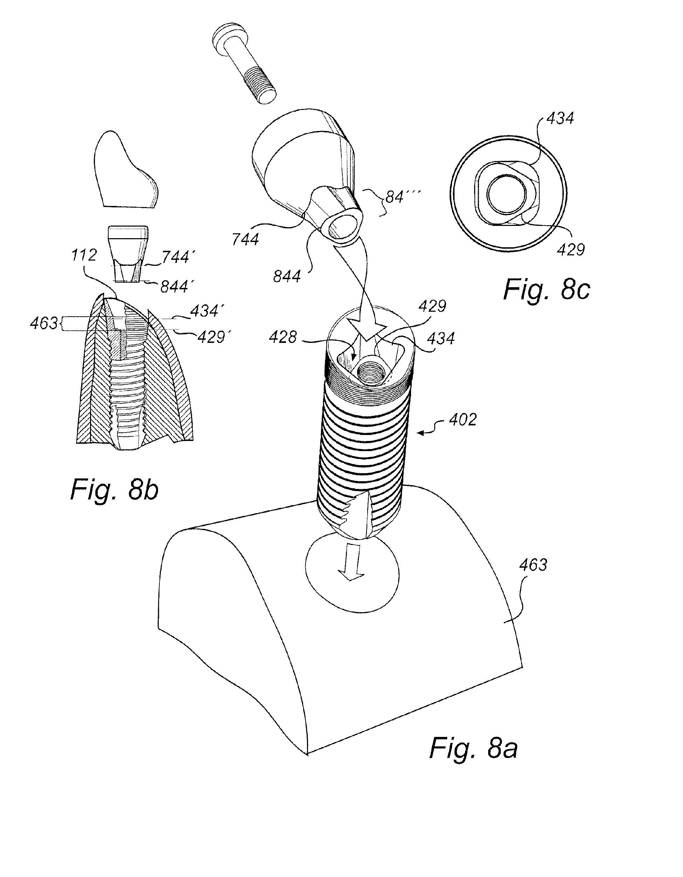

Figs. 8a-c illustrate yet another alternative embodiment of the engagement portion 84"' of an abutment and has most features in common with especially the engagement portion 84 illustrated in Figs. 4a-c. However, instead of an external octagon transforming into an external hexagon, the engagement portion 84"' has an external square-shape with rounded corners transforming into a triangular shape. A first plane 744' of the engagement portion 84"' may be considered to be located so that it intersects the engagement portion at the coronal end of the engagement portion, i.e. where the engagement portion has a square-shape. This portion of the engagement portion is denoted with reference number 744 and forms a first positioning portion. A second plane 844' at the engagement portion may be considered to be located so that it intersects the engagement portion at the apical end of the engagement portion, i.e. where the engagement portion has a triangular shape. This portion of the engagement portion is denoted with reference number 844 and forms a second positioning portion.

The socket 428 of the fixture 402 is provided with an indexing section 463 in the form of a coronally located internal tetragon with rounded corners that transforms into an apically located internal triangle with rounded corners. This is clearly seen in Fig. 8c illustrating a top view of the fixture 402. A first plane 434' of the indexing section 463 may be considered to be located so that it intersects the indexing section at the coronal end of the indexing section, i.e. where the indexing section has a square-shape. This portion of the indexing section is denoted with reference number 434 and forms a first indexing portion. A second plane 429' at the indexing section may be considered to be located so that it intersects the indexing section at the apical end of the indexing section, i.e. where the indexing section has a triangular shape. This portion of the indexing section is denoted with reference number 429 and forms a second indexing portion.

The outer dimension of the engagement portion 84"' is decreasing in the apical direction of the abutment. The reason for this being that the triangle of the second positioning portion 844 shall be able to pass through the internal tetragon of the first indexing portion 434 of the socket 428 without interference. The dimension of the socket is also decreasing in apical direction so that the engagement portion 84"' of the abutment fits tightly with the indexing section 463. This is also clearly seen in Fig. 4c illustrating a top view of the fixture and in which the triangle of second indexing portion 429 has dimensions so that it may be circumscribed in the tetragon of the first indexing portion 434.

Due to the fact that the square-shaped tetragon has an even number of rounded corners and the triangle has an uneven number of rounded corners, the abutment may only be received in one single position in the fixture, this is clearly seen when studying the top view of the socket 428 in Fig. 8c.

Furthermore, it is also for this embodiment, similar to the embodiments described above with abutments having only one of the positioning portions, possible to provide the abutment with only one of the positioning portions. Hence, an abutment being provided with only a tetragon at the first positioning portion may be received in the fixture in four different positions and an abutment being provided with only a triangle at the second positioning portion may be received in the fixture in three different positions.

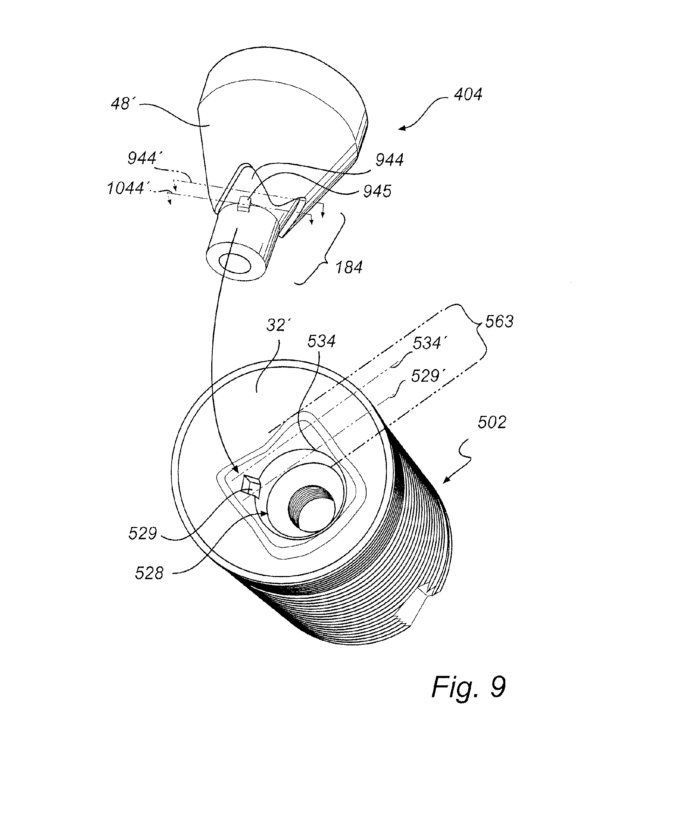

Fig. 9 illustrate a yet further alternative embodiment of the dental implant assembly. The lower part of the conically flaring extension portion 48' of the abutment 404 has a symmetrical cut-out 944 extending along its circumference and forming the first positioning portion. This portion will abut the fixture during use and therefore constitutes a part of the engagement portion. The abutment is further provided with a protrusion 945 at the cylindrical engagement portion 184, forming a second positioning portion. A first plane 944' may be considered to be located so that it intersects the abutment at the position of the symmetrical cut-out 944. A second plane 1044' may be considered to be located so that it intersects the engagement portion at the position of the protrusion 945.

The fixture 502 is, on its conical coronal portion 32', provided with a shape matching the shape of the cut-out 944 of the abutment. This portion constitutes a first indexing portion. Hence, in this embodiment of the fixture, the indexing section 563 also includes a portion of the coronal portion 32'. The fixture 502 is also provided with a recess 529 matching the shape of the protrusion 945, constituting a second indexing portion. A first plane 534' may be considered to be located so that it intersects the conical portion 32' at the position of the shape matching the symmetrical cut-out 944. A second plane 529' may be considered to be located so that it intersects the engagement portion at the position of the recess 529.

In the illustrated embodiment, an abutment without the protrusion (not illustrated) would, due to the symmetrical cut-out, be able to be positioned in four different indexing positions in relation to the fixture. The shown abutment, having a protrusion, may only be positioned in one rotational indexing position.

The cut-out 944 is illustrated as a symmetrical cut-out providing a rotational lock with the fixture in four different indexing positions. Other shapes of the cut-out is however also conceivable.

Figs. 10a-b illustrate two different embodiments of a driver 200. The driver 200 is used for rotatingly driving a fixture into a bore hole in the jawbone. The driver 200 is illustrated with a handle and may be a piece which can be used on its own. Alternatively, at its coronal end, the driver 200 may be connected to a wrench (such as a ratchet wrench), or a power driver machine, etc.

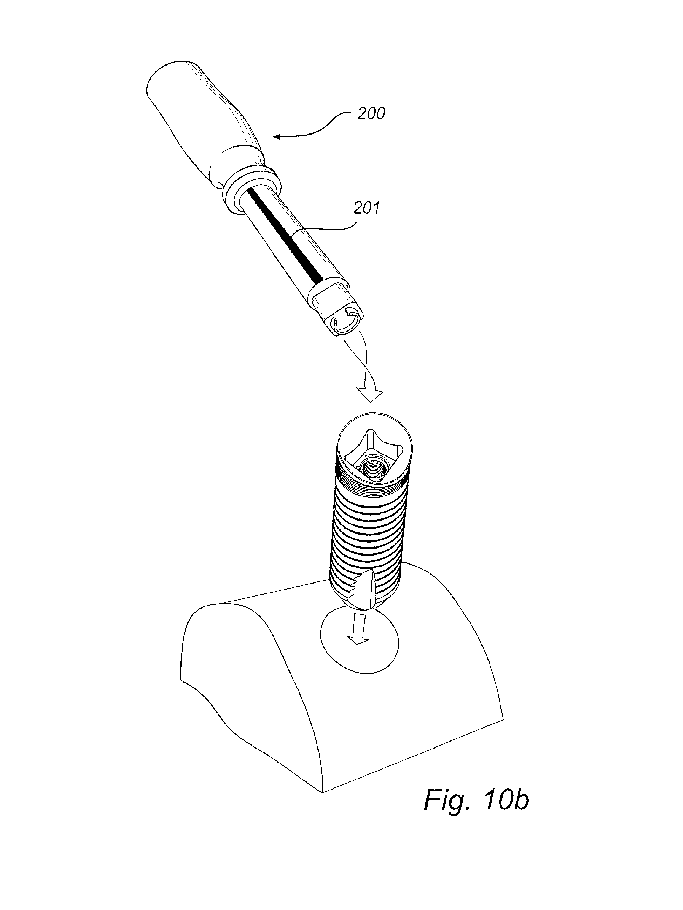

The driver 200 is provided with a visually distinctive marking 201, herein illustrated as an axial line. The distinctive marking 201 may have a color which is different from the rest of the driver 200, it may have different texture, or be slightly bulging, or any other appropriate viewable distinction compared to the rest of the driver 200. While the distinctive marking 201 is of limited use in connection with a fixture with no rotational limitation in the jawbone (such as the fixture in Figs. 1a-c), it is of more use in connection with a fixture having a designated rotational orientation in the jawbone (such as the fixture in Figs. 2a - 6c, 8a-c). With the latter type of fixture, the driver 200 can only be positioned in a single rotational indexing position, meaning that each time the driver engages such a fixture, the rotational position of the distinctive marking 201 relative to the fixture will always be the same. Thus, by viewing the axial line, a user will be able to deduce the rotational position of the fixture 202 in the jawbone. The driver interface illustrated in Fig. 10a corresponds to the abutment interface illustrated in Figs. 4a-c and the driver interface illustrated in Fig. 10b corresponds to the abutment interface illustrated in Figs. 2a-3c.

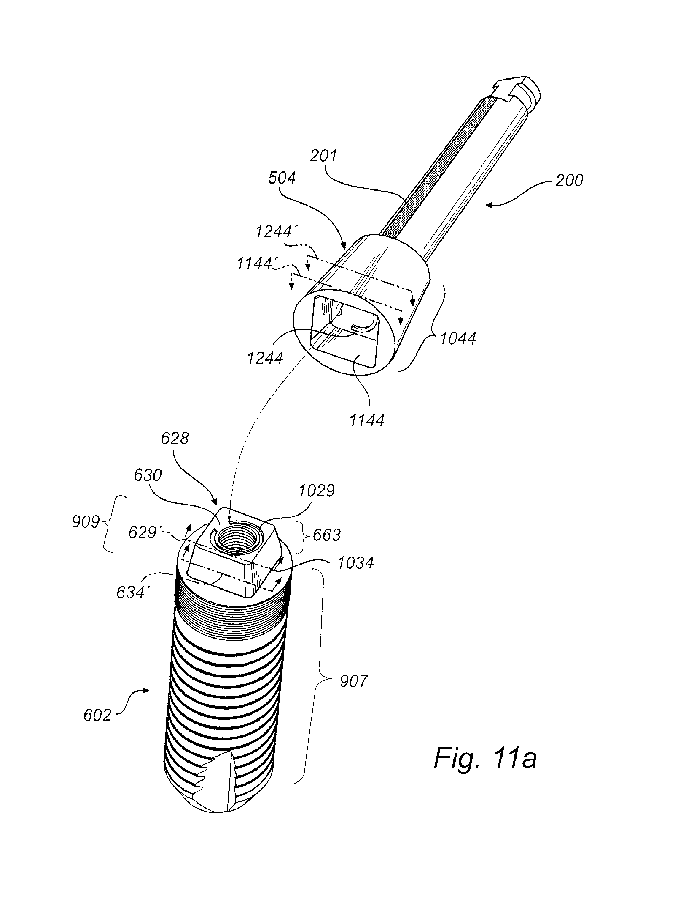

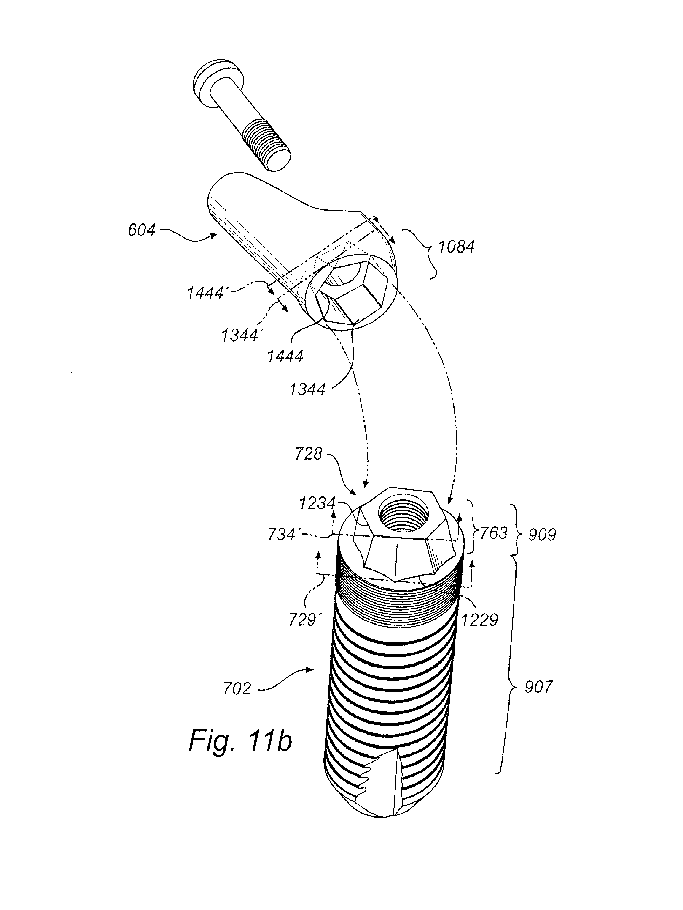

Figs. 11 a and 11 b illustrate, in accordance with at least one example embodiment of the invention, a fixture which can receive a dental component of one configuration in only one indexing position and a dental component of another configuration in a multitude of indexing positions. In this example a transgingival fixture is illustrated. Thus, similarly to the previously illustrated fixtures, the present fixture has a bone apposition portion 907 adapted to be submerged into the bone tissue. Additionally, the present fixture has a summit portion 909 adapted to be located outside the bone. The mating contours of the dental fixture is provided on the outer circumference of the summit portion 909 and the mating contours of the dental component is provided internally in a bore of the engagement portions 1044 and 1084, respectively. The dental component is herein illustrated in the form of a driver (Fig. 11 a) or an angled abutment (Fig. 12a).

The mating contours of the driver and the fixture in Fig. 11 a correspond mainly to the mating contours disclosed in Figs. 2a ― 3c and 10b. Hence, the internal bore of the engagement portion 1044 of the driver 504 is provided with a first square-shaped positioning portion 1144 and a second positioning portion 1244 in the form of a circular collar. The collar does, as is evident from the figure, not constitute a full circle. A first plane 1244' may be considered to be located so that it intersects the second positioning portion 1244 and a second plane 1144' may be considered to be located so that it intersects the engagement portion at the position of first positioning portion 1144.

Likewise, the fixture 602 is provided with a holding portion 628 (which in this embodiment correspond to the summit portion 909). The holding portion 628 is provided with an indexing section 663 having a first indexing portion 1034 in the form of a substantially square-shaped wall section and a second indexing portion 1029 in the form of a groove provided at the coronal end of the summit portion 909. The groove is not a full circle, instead a portion 630 of material is provided at a portion thereof so that the collar of the dental component may only be received in one position. A first plane 629' may be considered to be located so that it intersects the second indexing portion 1029 and a second plane 634' may be considered to be located so that it intersects the first indexing portion 1034.

The mating contours of the abutment and the fixture in Fig. 11 b correspond mainly to the mating contours disclosed in Figs. 5a - 5c. Hence, the engagement portion 1084 of the abutment 604 is provided with an internal heptagon and an internal hexagon, constituting a first positioning portion 1444 and a second positioning portion 1344, respectively. The heptagon and the hexagon are not discrete and transforms into each other. A first plane 1444' may be considered to intersect the abutment at the coronal end of the engagement portion, i.e. where the internal hexagon is provided. A second plane 1344' may be considered to intersect the abutment at the apical end of the engagement portion, i.e. where the internal heptagon is provided.

The fixture 702 is likewise provided with a holding portion 728 (which in this embodiment correspond to the summit portion 909). The holding portion 728 is provided with a indexing section 763 having a first indexing portion 1234 and a second indexing portion 1229 in the form of an external hexagon and an external heptagon, respectively. A first plane 734' may be considered to intersect the indexing section 763 at its coronal end, i.e. where the external hexagon is provided. A second plane 729' may be considered to intersect the indexing section at its apical end, i.e. where the internal heptagon is provided.

It is to be noted that the transgingival configuration of the dental implant assembly in which the mating contours of the fixture is provided on the outer contour of a post portion has been described in relation to the exemplifying embodiments. However, any configuration of the mating contours described for the embodiments disclosed in Figs. 1 ― 9 is conceivable. Furthermore, a transgingival fixture may not need to have its mating surfaces on the outer contour of a post, it may also be provided with a socket, as the fixtures disclosed in Figs. 1 - 10b. Even further, the holding portion of the transgingival fixture need not correspond to the summit portion, it may be only a part of it, or, in case of an internal socket in the summit portion, also extend further down to the bone apposition portion.

The present inventive concept has been described in relation to certain exemplifying embodiments. However, several modifications and adaptations are possible within the scope of the inventive concept as defined in the appended claims. For example, the dental component is herein illustrated as an abutment having a through hole and a driver. However, the provision of at least two positioning portions is equally applicable to other suggested dental components such as replicas, healing caps and impression pick-ups.

Furthermore, it should be understood that even if the positioning portions and indexing portions of the present invention has been described as triangles, tetragons, hexagons, heptagons and octagons in some of the described embodiments so are other shapes conceivable. The indexing positioning portions and indexing portions may e.g. also be provided in the shapes of pentagons, nonagons, decagons or any other polygonal shape.

Furthermore, the engagement portion 44 illustrated in Figs. 1a-2c has been described as having either one positioning portion 144 or two positioning portions 144, 244. It is also conceivable with an embodiment in which the engagement portion 44 is provided with only the second positioning portion 244 and a stem similar to the stem 345 illustrated in e.g. Figs. 7a-b.

## Claims

1. A dental fixture for insertion into a jawbone, said fixture (2; 102; 202; 302; 402; 502; 602; 702) comprising a holding portion (28; 228; 328; 428; 528; 628; 728) which is arranged and configured for holding an engagement portion (44; 84; 84'; 84"; 84"'; 184; 1044; 1084) of a dental component (4; 104; 204; 304; 200; 404; 504; 604), the holding portion being provided with an indexing section (63; 263; 363; 463; 563; 663; 763), wherein the shape of the mating contour of the indexing section in a first plane (34'; 234'; 334'; 434'; 534'; 634') differs from the shape of the mating contour of the indexing section in a second plane (31'; 229'; 329'; 429'; 529'; 629') being taken at a different height as seen in the apical-coronal extension of said fixture, and wherein the shapes of the mating contours of the indexing section (63; 263; 363; 463; 563; 663; 763) at said first and second planes (34', 31'; 234', 229'; 334', 329'; 434', 429; 529', 534"; 629', 634'; 729', 734') together allow a received dental component to be positioned in only one or two positions in relation to the fixture.

2. The dental fixture as claimed in claim 1, wherein the shape of the mating contour of the indexing section (63; 263; 363; 463; 563; 663; 763) at at least one of said first and second planes (34'; 234', 229'; 334', 329'; 434', 429'; 534'; 634'; 729', 734') individually allow a received dental component to be positioned in a plurality of positions.

3. The dental fixture as claimed in any one of claims 1-2, wherein the shapes of the mating contours of the indexing section (63; 263; 363; 463; 563; 663; 763) at said first and second planes (34', 31'; 234', 229'; 334', 329'; 434', 429; 529', 534"; 629', 634'; 729', 734') together allow a received dental component to be positioned in only one position in relation to the fixture.

4. The dental fixture as claimed in any one of claims 1-3, wherein the shape of the mating contour of the indexing section (63; 263; 363; 463; 563; 663; 763) at one of said first and second planes (31'; 529'; 629') of said indexing section individually allow a received dental component to be positioned in only one position.

5. The dental fixture as claimed in any one of claims 1-4, wherein the mating contour of the indexing section (63; 263; 363; 463; 663; 763) at at least one of said planes (34'; 234', 229'; 334', 329'; 434', 429'; 634'; 729', 734') has the shape of a polygon.

6. The dental fixture as claimed in any one of claims 1-5, wherein the indexing section (63; 263; 363; 463; 763) has a polygonal shape at both the first and second planes (234', 229'; 334', 329'; 434', 429'; 729', 734'), wherein the indexing section (63; 263; 363; 463; 763) is arranged and configured such that the number of sides of it at one of the planes is not a multiple integer of the number of sides of it at the other plane of said at least two planes.

7. The dental fixture as claimed in any one of claims 1-6, wherein the indexing section (63; 263; 363; 463; 763) has a polygonal shape at both the first and second planes (334', 329'; 434', 429'; 729', 734'), wherein the indexing section is arranged and configured such that the number of sides of it at one of the planes is an even number and the number of sides of it at the other plane of said at least two planes is an uneven number.

8. The dental fixture as claimed in any one of claims 1-7, wherein said indexing section (63) comprises a protrusion (30) provided at a wall of said holding portion, and wherein said protrusion is provided at said second plane of said indexing section.

9. The dental fixture as claimed in any one of claims 1-8, wherein said indexing section (63) comprises a groove (31) provided at the bottom surface (27) of said holding portion (28), wherein a protrusion (30) protrudes from the circumference of said groove (31) towards the center of said fixture (2), and wherein said groove and protrusion is provided at said second plane (31').

10. The dental fixture as claimed in any one of claims 1-9, wherein said indexing section (663) comprises a groove (1029) provided at the coronal surface of said holding portion (628), wherein a protrusion (630) protrudes from the circumference of said groove (1029) towards the center of said fixture (602).

11. The dental fixture as claimed in any one of claims 1-10, wherein said second plane (31'; 229'; 329'; 429'; 529'; 634) is located apically of said first plane of said indexing section.

12. The dental fixture as claimed in any one of claims 1-11, wherein the holding portion is a socket which extends apically from a coronal end (12) of the fixture (2; 102; 202; 302; 402; 502), and wherein the outer circumference of the indexing section at the apically located plane (31'; 229'; 329'; 429'; 529') has dimensions such that it is able to be circumscribed in the outer circumference of the indexing section at the coronally located plane (34'; 234'; 334'; 434'; 534').

13. The dental fixture as claimed in any one of claims 1-11, wherein the holding portion is a post portion extending coronally from the bone-engaging portion (907) of the fixture (602; 702), and wherein the outer circumference of the indexing section at the coronally located plane has dimensions such that it is able to be circumscribed in the outer circumference of the indexing section at the apically located plane.

14. A dental component, comprising an engagement portion (44; 84; 84'; 84"; 84"'; 184) for engagement with a holding portion of a dental fixture adapted to be inserted into a jawbone, wherein the shape of the mating contour of the engagement portion in a first plane (144'; 344'; 544'; 744'; 944'; 1244'; 1444') differs from the shape of the mating contour of the engagement portion in a second plane (244'; 444'; 644'; 844'; 1044'; 1144'1344') being taken at a different height as seen in the apical-coronal extension of said dental component, and wherein the shapes of the mating contours of the engagement portion together allow the dental component to be positioned in only one or two rotational positions in relation to a dental fixture..

15. The dental component as claimed in claim 14, wherein the shape of the mating contour of the engagement portion is complementary to the shape of the indexing section of the dental fixture described in any one of claims 1-13.

16. A dental implant assembly, comprising a dental component as claimed in any one of claims 14-15 connected to or to be connected to a fixture as claimed in any one of claims 1-13, wherein the dental component only has one or two possible indexing positions relative to the fixture.

17. A dental implant assembly, comprising a dental fixture as claimed in any one of claims 1-13, and a dental component being provided with an engagement portion, which at one plane thereof has a mating contour with a shape corresponding to the shape of the mating contour of the indexing section of the holding portion at either the first or the second plane of said indexing section, thereby enabling the dental component to be positioned in any one of a plurality of indexing positions relative to the fixture.
